# FASCICULE DE BREVET EUROPEEN

(11) **EP 2 961 704 B1**
(45) Date de publication et mention de la délivrance du brevet: **30.05.2018**
(21) Numéro de dépôt: 14713195.7
(22) Date de dépôt: 28.02.2014
(51) Int. Cl.: C03B 32/02, C03C 3/085, C03C 4/02, H05B 3/74, C03C 10/00, C03C 3/087, F24C 15/10

(54) **VITROCERAMIQUE DU TYPE ALUMINOSILICATE DE LITHIUM CONTENANT UNE SOLUTION SOLIDE DE -SPODUMENE**
GLASKERAMIK VOM LITHIUM-ALUMINOSILIKAT-TYP MIT EINER FESTEN SPODUMEN-LÖSUNG
GLASS-CERAMIC OF LITHIUM ALUMINOSILICATE TYPE CONTAINING A SOLID SOLUTION OF -SPODUMENE

(30) Priorité: 28.02.2013 FR 1351769; 20.03.2013 US 201361803577 P
(43) Date de publication de la demande: 06.01.2016
(73) Titulaire: Eurokera S.N.C., 02400 Château-Thierry (FR)
(72) Inventeur: PLEVACOVA, Kamila, F-75017 Paris (FR); JOUSSEAUME, Cécile, F-75017 Paris (FR); VILATO, Pablo, F-75014 Paris (FR); LECOMTE, Emmanuel, F-02400 Nesles La Montagne (FR)
(74) Mandataire: Saint-Gobain Recherche
(86) Numéro de dépôt international: PCT/FR2014/050438
(87) Numéro de publication internationale: WO 2014/132005

(56) Documents cités:
- WO-A1-2012/001300
- DE-U1-202010 014 361
- FR-A1- 2 955 400
- US-A1- 2008 026 927
- US-A1- 2012 035 041

## Description

La présente invention se rapporte au domaine des vitrocéramiques. Elle concerne plus précisément une vitrocéramique présentant un aspect particulier en réflexion ainsi qu'une courbe de transmission contrôlée, ainsi que des articles en une telle vitrocéramique, notamment des plaques de cuisson, et les verres précurseurs de telles vitrocéramiques.

Dans une application en tant que plaque de cuisson, notamment pour des dispositifs de chauffage du type radiant, il est nécessaire que la plaque réponde à certaines exigences quant à ses propriétés optiques, tant dans le domaine du visible que dans celui de l'infrarouge. Il est en particulier important que les éléments chauffants puissent être dissimulés hors fonctionnement mais qu'ils soient bien visibles lorsqu'ils fonctionnent. L'efficacité énergétique des dispositifs est également importante, afin de réduire autant que possible le temps de cuisson des aliments. L'aspect esthétique de la plaque est aussi un paramètre à prendre en compte, notamment pour que la plaque s'intègre parfaitement dans les cuisines. Les plaques de cuisson en vitrocéramique les plus courantes sur le marché, et décrites par exemple dans le brevet US 5,070,045, sont des vitrocéramiques du type aluminosilicate de lithium contenant une phase cristalline constituée essentiellement d'une solution solide de β-quartz, transparentes mais de très faible transmission lumineuse et présentant un aspect noir s'intégrant dans la majorité des cuisines. Il peut être intéressant, afin d'améliorer encore cette intégration, de disposer de plaques de cuisson présentant d'autres aspects. En particulier, des plaques de cuisson ayant une teinte grise seraient particulièrement appréciables.

L'utilisation de vitrocéramiques transparentes contenant une solution solide de β-quartz comme phase cristalline principale s'est révélé inadaptée à l'obtention de tels aspects optiques, car de par leur très faible transmission lumineuse (imposée par l'application), elles apparaissent toujours noires, quelle que soit leur véritable teinte en transmission.

Pour obtenir de telles teintes, une possibilité consiste à revêtir la surface d'une vitrocéramique claire d'un revêtement coloré, par exemple en une résine résistant à la chaleur ou en un émail. Peu de résines sont toutefois compatibles avec les températures élevées subies par la plaque dans le cas d'un chauffage radiant. En outre, le dépôt de résine ou d'émail implique une étape supplémentaire coûteuse dans le procédé de fabrication des plaques de cuisson. Il existe donc un besoin de disposer de plaques de cuisson adaptées au chauffage radiant et présentant l'aspect optique désiré sans avoir à ajouter une résine ou un émail sur toute la surface de la plaque.

A cet effet, l'invention a tout d'abord pour objet une vitrocéramique du type aluminosilicate de lithium contenant une solution solide de β-spodumène et présentant, pour une épaisseur de 4 mm :
- un facteur de transmission lumineuse compris dans un domaine allant de 0,3 à 2%, notamment de 0,6 à 1,7%,
- une transmission optique pour une longueur d'onde de 625 nm supérieure à 2,0%, notamment supérieure à 3,0%,
- une transmission optique pour une longueur d'onde de 950 nm comprise dans un domaine allant de 50 à 75 %,
- une transmission optique pour une longueur d'onde de 1600 nm d'au moins 50%, et
- des coordonnées colorimétriques L*, a*, b* en réflexion diffuse pour un illuminant D65 et un observateur de référence à 2° telles que : 15,0 ≤ L* ≤ 40,0, -3,0 ≤ a* ≤ 3,0 et -10,0 ≤ b* ≤ 3,0.

Ladite vitrocéramique est en outre telle que sa composition chimique comprend les constituants suivants, variant dans les limites pondérales ci-après définies :

| | |
|---|---|
| SnO₂ | 0,2-0,6%, notamment 0,25-0,5% |
| V₂O₅ | 0,015-0,070%, notamment 0,015-0,050% |
| Cr₂O₃ | 0,01-0,04% ou Bi₂O₃ 0,05-3,0% |
| Fe₂O₃ | 0,05- <0,15% |
| As₂O₃+Sb₂O₃ | < 0,1%, notamment < 0,05%. |

Dans le présent texte, l'ensemble des teneurs sont exprimées en pourcentages pondéraux.

La teneur en V₂O₅ est de préférence d'au plus 0,060%.

La solution solide de β-spodumène représente au moins 20%, notamment 30% ou 40% en poids de la fraction cristallisée totale. De préférence, la vitrocéramique selon l'invention comprend une solution solide de β-spodumène comme phase cristalline principale. Dans certains cas, la solution solide de β-spodumène peut représenter plus de 50%, notamment 60% et même 70% ou 80% en poids de la fraction cristallisée totale. La vitrocéramique selon l'invention peut même parfois comprendre une solution solide de β-spodumène comme phase cristalline unique. Outre la solution solide de β-spodumène, la vitrocéramique peut comprendre une solution solide de β-quartz. La fraction cristallisée peut donc avantageusement comprendre un mélange de solution solide de β-spodumène et de solution solide de β-quartz, dans des proportions massiques d'au moins 20:80, notamment 40:60, voire 50:50 et même 60:40 ou 70:30. Dans certains cas, cette proportion peut même être d'au moins 80:20, 90:10 ou 95:5. Les quantités d'une phase cristalline donnée peuvent être déterminées en diffraction des rayons X par la méthode de Rietveld. La fraction cristalline représente normalement au moins 60%, notamment 70% et même 75% en poids de la vitrocéramique.

Les inventeurs ont mis au point cette combinaison de caractéristiques optiques et chimiques, laquelle permet d'atteindre des propriétés uniques, tant en termes d'aspect esthétique (teinte grise plus ou moins claire et tirant éventuellement vers le brun) que de caractéristiques fonctionnelles. Les divers avantages de l'invention apparaîtront au fil de la présente description.

Le facteur de transmission lumineuse (au sens de la norme EN 410) pour une épaisseur de 4 mm est compris dans un domaine allant de 0,3 à 2%, notamment de 0,6 à 1,7% et même de 1,0 à 1,7%, plus particulièrement de 1,1 à 1,6%. Pour de faibles facteurs de transmission lumineuse, les éléments chauffants (notamment du type radiant) ne sont pas visibles lorsqu'ils sont en service, ce qui pose des problèmes de sécurité. Lorsque le facteur de transmission lumineuse est en revanche trop élevé, les éléments chauffants sont visibles mêmes hors service, ce qui pose un problème esthétique.

La transmission optique pour une longueur d'onde de 625 nm est supérieure à 2,0%, notamment supérieure à 3,0% ou 4,0%, de préférence supérieure à 4,5 ou même 5,0%. Elle est normalement d'au plus 50%. De la sorte, les afficheurs rouges, couramment utilisés pour les plaques de cuisson, sont parfaitement visibles au travers de la vitrocéramique.

La transmission optique pour une longueur d'onde de 950 nm est comprise dans un domaine allant de 50 à 75 %, notamment de 55 à 70%, ce qui permet l'utilisation de touches de contrôle électronique conventionnelles, émettant et recevant à cette longueur d'onde.

La transmission optique pour une longueur d'onde de 1600 nm est d'au moins 50%, notamment comprise dans un domaine allant de 55% à 80%, et même de 60 à 75%. Cette transmission affecte les performances thermiques de la plaque, trop faibles si la transmission est elle-même trop faible, et pouvant induire un chauffage excessif et dangereux lorsque la transmission est trop élevée.

La couleur en réflexion obtenue est telle que les coordonnées colorimétriques L*, a*, b* en réflexion diffuse pour un illuminant D65 et un observateur de référence à 2° vérifient les inégalités suivantes : 15,0 ≤ L* ≤ 40,0, -3,0 ≤ a* ≤ 3,0 et -10,0 ≤ b* ≤ 3,0.

Les coordonnées colorimétriques respectent de préférence l'une au moins des inégalités suivantes, voire deux ou trois de ces inégalités :
- 20,0 ≤ L* ≤ 30,0,
- -1,5 ≤ a* ≤ 1,5.
- -5,0 ≤ b* ≤ 1,0.

Les coordonnées colorimétriques sont calculées à partir d'un spectre en réflexion diffuse, obtenu au moyen d'un spectrophotomètre muni d'une sphère intégrante, sous incidence perpendiculaire et après soustraction de la réflexion spéculaire et d'une ligne de base obtenue par la même mesure réalisée sur du Spectralon®.

Les inventeurs ont pu mettre en évidence après de longs travaux que la courbe de transmission et la teinte en réflexion unique recherchées pouvaient de manière surprenante être atteintes grâce à la présence d'une solution solide de β-spodumène combinée avec un choix de colorants et d'agents d'affinage particulier, dans des teneurs bien précises. Les valeurs élevées de L* témoignent de l'importance de la réflexion diffuse, due à la présence de cristaux de β-spodumène.

La composition renferme SnO₂ à titre d'agent d'affinage. L'affinage est d'autant plus aisé à mettre en oeuvre et d'autant plus performant que la quantité de SnO₂ présente est importante. Il convient toutefois de minimiser, voire d'éviter, tout phénomène de dévitrification et de contrôler l'influence dudit SnO₂ sur la transmission et la réflexion optiques. L'oxyde d'étain est en effet susceptible de réduire le vanadium et le fer présent, durant la céramisation. Une teneur en SnO₂ de 0,2 à 0,6% en masse est requise, notamment de 0,25 à 0,5%, voire d'au plus 0,4%.

Les vitrocéramiques selon l'invention ne renferment ni As₂O₃, ni Sb₂O₃ ou ne renferment que des traces d'au moins l'un de ces composés toxiques, SnO₂ étant présent en lieu et place de ces agents d'affinage conventionnels. Si des traces de l'un au moins de ces composés sont présentes, c'est à titre de produit contaminant, c'est *a priori* dû à la présence dans la charge de matières premières vitrifiable de matériaux recyclés type calcin (issus d'anciennes vitrocéramiques affinées avec ces composés). En tout état de cause, seules des traces de ces composés toxiques sont susceptibles d'être présentes : As₂O₃ + Sb₂O₃ < 1000, voire 500 ppm.

V₂O₅ est un colorant principal des vitrocéramiques selon l'invention. En effet, V₂O₅, en présence de SnO₂, assombrit significativement le verre pendant sa céramisation (voir ci-dessus). V₂O₅ est responsable de l'absorption, principalement en deçà de 700 nm et il est possible, en sa présence, de conserver une transmission suffisamment élevée à 950 nm et dans l'infrarouge. Une quantité de V₂O₅ comprise dans un domaine allant de 0,015 à 0,070%, notamment de 0,015 à 0,060%, plus particulièrement de 0,015 à 0,050, voire de 0,015 à 0,035% s'est révélée adéquate.

L'invention met en oeuvre la combinaison de V₂O₅ avec au moins un autre colorant principal choisi parmi Cr₂O₃, Bi₂O₃ et leur mélange.

Selon un mode de réalisation, la vitrocéramique comprend V₂O₅ et Cr₂O₃ (dans les teneurs précitées et celles explicitées ci-après), mais pas Bi₂O₃. Ainsi, la teneur pondérale en Cr₂O₃ est comprise dans un domaine allant de 0,01 à 0,04%, notamment de 0,015 à 0,035%, voire de 0,02% à 0,03%, et la teneur en Bi₂O₃ est nulle.

Selon une autre mode de réalisation, la vitrocéramique comprend V₂O₅ et Bi₂O₃ (dans les teneurs précitées et celles explicitées ci-après), mais pas Cr₂O₃. Ainsi, la teneur pondérale en Bi₂O₃ est comprise dans un domaine allant de 0,05 à 3,0%, notamment de 0,1 à 2,0%, voire de 0,2 ou 0,3 à 1,0%, et la teneur en Cr₂O₃ est nulle.

Selon un autre mode de réalisation, la vitrocéramique comprend V₂O₅, Bi₂O₃ et Cr₂O₃ (dans les teneurs précitées et celles explicitées ci-après). Dans de cas, la teneur pondérale en Cr₂O₃ est de préférence comprise dans un domaine allant de 0,01 à 0,03%, notamment de 0,015% à 0,025% et la teneur pondérale en Bi₂O₃ est de préférence comprise dans un domaine allant de 0,1 à 1%, notamment de 0,2 à 0,5%.

Lorsqu'il est présent, Cr₂O₃ est avantageusement compris en une teneur pondérale comprise dans un domaine allant de 0,015 à 0,035%, notamment de 0,02 à 0,03%. Lorsqu'il est présent, Bi₂O₃ est avantageusement compris en une teneur pondérale comprise dans un domaine allant de 0,1 à 2,0%, notamment de 0,2 à 1,5%, voire de 0,2 à 1,0%.

Les vitrocéramiques selon l'invention ont généralement une transmission optique pour une longueur d'onde de 450 nm inférieure à 0,1%.

L'oxyde de fer conduit à une absorption principalement dans l'infra-rouge et sa teneur doit être d'au moins 500 ppm, avantageusement d'au moins 700 ppm pour obtenir la transmission requise. Si sa teneur atteint ou dépasse 1500 ppm l'absorption dans l'infra-rouge est trop élevée dans la vitrocéramique mais aussi dans le verre initial, ce qui le rend plus difficile à fondre et à affiner. Avantageusement, la teneur pondérale en oxyde de fer est comprise entre 700 et 1200 ppm (0,07 à 0,12%).

Il n'est pas exclu du cadre de l'invention que la composition des vitrocéramiques comprenne, en quantité plus ou moins significative, outre V₂O₅, Fe₂O₃, Bi₂O₃ et Cr₂O₃, au moins un autre colorant, tel CoO, CuO, MinO₂, NiO, CeO₂. L'oxyde de manganèse MnO₂ peut notamment être utilisé pour conférer une teinte tirant un peu plus vers le marron. Il n'est toutefois pas question que la présence dudit au moins un autre colorant influe significativement sur la courbe de transmission optique et sur l'aspect en réflexion visés. Il convient de veiller notamment à d'éventuelles interactions, susceptibles, même avec des faibles taux de colorants, de modifier significativement ladite courbe de transmission optique ou ledit aspect en réflexion...

Ainsi, CoO ne peut-il *a priori* être présent qu'en très faible quantité dans la mesure où cet élément absorbe fortement dans l'infra-rouge et de façon non négligeable à 625 nm, et confère une coloration bleue en réflexion. De préférence, la composition chimique de la vitrocéramique comprend moins de 200 ppm, avantageusement 100 ppm, voire même 50 ppm ou 30 ppm d'oxyde de cobalt.

De même, la teneur en NiO est de préférence d'au plus 500 ppm, notamment 200 ppm, voire nulle, à l'exception de traces inévitables. La teneur en CeO₂ est de préférence d'au plus 0,5%, notamment 0,1% voire nulle, sauf impuretés inévitables. La teneur en MnO₂ est de préférence d'au plus 0,5%, notamment 0,1%, voire nulle, sauf impuretés inévitables. La teneur en CuO est de préférence d'au plus 500 ppm, notamment 200 ppm, voire nulle, sauf impuretés inévitables.

De préférence, la composition des vitrocéramiques selon l'invention ne comprend pas d'auxiliaires d'affinage tels F et Br. Elle ne comprend pas, à l'exception de traces inévitables, de F et de Br. Ceci est particulièrement avantageux au vu du prix et/ou de la toxicité de ces composés. Au sein des compositions de l'invention, la présence d'auxiliaire(s) d'affinage(s) est *a priori* superflue dans la mesure où SnO₂ est présent en les quantités indiquées.

La composition de base des vitrocéramiques de l'invention peut varier dans une large mesure. De préférence la composition chimique de la vitrocéramique comprend les constituants suivants, variant dans les limites pondérales ci-après définies :

| | |
|---|---|
| SiO₂ | 60-72% |
| Al₂O₃ | 18-23% |
| Li₂O | 2,5-4,5% |
| MgO | 0-3% |
| ZnO | 1-3% |
| TiO₂ | 1,5-4% |
| ZrO₂ | 0-2,5% |
| BaO | 0-5% |
| SrO | 0-5% |
| avec BaO + SrO | 0-5% |
| CaO | 0-2% |
| Na₂O | 0-1,5% |
| K₂O | 0-1,5% |
| P₂O₅ | 0-5% |
| B₂O₃ | 0-2%. |

Ces compositions se prêtent parfaitement à la fusion de verre précurseur puis à la céramisation, et notamment au développement de solution solide de β-spodumène.

De préférence, la teneur pondérale en MgO est d'au plus 2%, notamment 1%. La teneur pondérale en CaO est avantageusement d'au plus 1%. La sommes de teneurs pondérales en Na₂O et K₂O est de préférence d'au plus 1%, notamment 0,5%. La teneur pondérale en BaO est de préférence d'au plus 3%, notamment 2% et même 1%. Ces différents domaines préférés, seuls ou en combinaison, permettent de réduire le coefficient de dilatation thermique de la vitrocéramique.

De préférence, la somme des teneurs en SiO₂, Al₂O₃, Li₂O, MgO, ZnO, TiO₂, ZrO₂, BaO, SrO, CaO, Na₂O, Li₂O, K₂O, P₂O₅, B₂O₃, SnO₂, V₂O₅, Fe₂O₃, Cr₂O₃, Bi₂O₃ est d'au moins 98%, notamment 99%.

L'invention a aussi pour objet un article comprenant une vitrocéramique selon l'invention. Ledit article est avantageusement constitué en totalité d'une vitrocéramique selon l'invention. Ledit article est notamment une plaque de cuisson, un ustensile de cuisson ou une sole de four à micro-ondes. La plaque de cuisson est avantageusement intégrée à un dispositif de cuisson, notamment du type radiant, comprenant au moins un élément chauffant par rayonnement. La plaque de cuisson peut être revêtue d'un décor en émail.

En particulier lorsque la plaque de cuisson possède des éléments chauffants par rayonnement(du type "radiant"), le coefficient de dilatation thermique linéaire entre 20 et 700°C de la vitrocéramique est avantageusement d'au plus 10.10⁻⁷/K.

Il est également décrit un verre d'aluminosilicate de lithium, précurseur des vitrocéramiques de l'invention, telles que décrites ci-dessus. Ledit verre présente la composition massique desdites vitrocéramiques, telle qu'explicitée ci-dessus. On peut incidemment noter que lesdits verres précurseurs présentent avantageusement une transmission optique, pour toute longueur d'onde comprise entre 1000 et 2500 nm, supérieure à 60 %, pour une épaisseur de 3 mm. Leur fusion et affinage sont alors facilités.

L'invention a enfin pour objet un procédé d'élaboration d'une vitrocéramique selon l'invention, comprenant le traitement thermique d'une charge de matières premières vitrifiable, dans des conditions qui assurent successivement fusion, affinage puis céramisation, caractérisé en ce que ladite charge présente une composition qui permet d'obtenir une vitrocéramique selon l'invention.

La céramisation est mise en oeuvre à des températures permettant le développement de solution solide de β-spodumène. La température de céramisation adéquate, qui peut varier en fonction de la matrice verrière, peut être choisie après analyse thermique différentielle, qui permet la détermination de la température de cristallisation de la phase β-quartz puis, à plus haute température, de la température à laquelle a lieu la transformation (non-réversible) du β-quartz en β-spodumène. La température de céramisation est de préférence d'au moins 950°C, notamment 970°C et même 1000 ou 1020°C.

Les exemples qui suivent illustrent l'invention de manière non limitative.

On a fondu de manière connue différents verres dont la composition chimique (teneurs pondérales en oxydes) est donnée dans les tableaux 1 et 2 ci-après.

**Tableau 1**

| | **C1** | **1** | **2** | **3** |
|---|---|---|---|---|
| SiO₂ | 65,53 | 65,45 | 65, 02 | 65,20 |
| Al₂O₃ | 20,48 | 20, 65 | 20,48 | 20,48 |
| Li₂O | 3,75 | 3,75 | 3,75 | 3,75 |
| Na₂O | 0,56 | 0, 60 | 0,56 | 0,56 |
| K₂O | 0,23 | 0,22 | 0,23 | 0,23 |
| MgO | 0,24 | 0,37 | 0,24 | 0,24 |
| ZnO | 1,51 | 1,52 | 1,51 | 1,51 |
| BaO | 2,55 | 2,46 | 2,55 | 2,55 |
| CaO | 0,36 | 0,45 | 0,36 | 0,36 |
| TiO₂ | 3, 02 | 2, 96 | 3, 02 | 3, 02 |
| ZrO₂ 2 | 1,35 | 1,30 | 1,35 | 1,35 |
| SnO₂ | 0,29 | 0,31 | 0,29 | 0,29 |
| V₂O₅ | 0,0171 | 0,0355 | 0,0200 | 0,0200 |
| Fe₂O₃ | 0,0804 | 0,1220 | 0,1200 | 0,1200 |
| Cr₂O₃ | | 0,0215 | | 0,0200 |
| Bi₂O₃ | | | 0,50 | 0,30 |
| CoO | 0,0289 | 0,0015 | | |

**Tableau 2**

| | **4** | **5** | **6** | **7** | **8** |
|---|---|---|---|---|---|
| SiO₂ | 65,59 | 65,57 | 65,55 | 65,49 | 64, 91 |
| Al₂O₃ | 20,48 | 20, 69 | 20, 68 | 20,48 | 20,73 |
| Li₂O | 3,75 | 3,76 | 3,76 | 3,75 | 3,75 |
| Na₂O | 0,28 | 0,3 | 0,6 | 0,28 | 0, 6 |
| K₂O | 0,12 | 0,12 | 0,22 | 0,12 | 0,22 |
| MgO | 0,24 | 0,37 | 0 | 0,37 | 0,37 |
| ZnO | 1,51 | 1,52 | 1,52 | 1,51 | 1,51 |
| BaO | 2,55 | 2,46 | 2,46 | 2,55 | 2,45 |
| CaO | 0,36 | 0,45 | 0,45 | 0,36 | 0,44 |
| TiO₂ | 3,02 | 2,97 | 2, 97 | 3,02 | 2,96 |
| ZrO₂ | 1,35 | 1,3 | 1,3 | 1,35 | 1,3 |
| SnO₂ | 0,29 | 0,31 | 0,31 | 0,29 | 0,31 |
| V₂O₅ | 0,0200 | 0,0355 | 0,0355 | 0,0200 | 0,0550 |
| MnO₂ | | | | 0,4 | |
| Fe₂O₃ | 0,1200 | 0,1220 | 0,1220 | 0,1200 | 0,1248 |
| Cr₂O₃ | 0,0200 | 0,0215 | 0,0215 | 0,0200 | 0,0233 |
| Bi₂O₃ | 0,30 | | | | |
| CoO | | 0,0015 | 0,0015 | | |
| As₂O₃ | | | | | 0,083 |

La composition C1 (comparative) ne contient ni Bi₂O₃ ni Cr₂O₃. Les autres compositions sont conformes à l'invention.

Les plaques de verre ont ensuite été céramisées selon différents cycles, caractérisés par des températures de céramisation et temps de palier à cette température différents. Le cycle de céramisation met en oeuvre un chauffage rapide jusqu'à 650°C puis une montée jusqu'à 820°C à une vitesse de 5°C/min et enfin une montée jusqu'à la température de céramisation à une vitesse de 15°C/min suivi d'un maintien à cette température.

Les tableaux 3 et 4 ci-après récapitulent les résultats obtenus, en indiquant :
- le type de verre utilisé pour la céramisation,
- la température de céramisation, notée T et exprimé en °C,
- le temps de palier à la température de céramisation, noté t et exprimé en minutes,
- l'épaisseur de la plaque, notée e et exprimée en mm,
- les propriétés en transmission à l'épaisseur réelle, calculées à partir d'un spectre en transmission réalisé par spectrophotométrie : le facteur de transmission lumineuse au sens de la norme EN 410, noté TL, les transmissions pour une longueur d'onde de 625 nm (notée T625), de 950 nm (notée T950) et de 1600 nm (notée T1600),
- les coordonnées colorimétriques L*a*b* en réflexion diffuse, calculées à partir d'un spectre en réflexion diffuse, obtenu au moyen d'un spectrophotomètre muni d'une sphère intégrante, sous incidence perpendiculaire et après soustraction de la réflexion spéculaire et d'une ligne de base obtenue par la même mesure réalisée sur du Spectralon®.
- le type de cristaux : Q désigne le β-quartz comme phase cristalline principale et S la présence significative de β-spodumène comme phase cristalline.

**Tableau 3**

| | **A** | **B** | **C** | **D** | **E** | **F** |
|---|---|---|---|---|---|---|
| Verre | 1 | 1 | 1 | C1 | 2 | 3 |
| T(°C) | 930 | 1020 | 1020 | 1020 | 1020 | 1020 |
| t (min) | 4 | 10 | 12 | 10 | 10 | 10 |
| | | | | | | |
| e (mm) | 4,08 | 3, 90 | 3, 90 | 4,21 | 4,24 | 3, 67 |
| | | | | | | |
| TL (%) | 1,1 | 0, 85 | 0, 62 | 0, 86 | 0, 40 | 1, 90 |
| T625 (%) | 3, 6 | 3, 3 | 3, 8 | 34, 6 | 22,1 | 37,8 |
| T950 (%) | 61,1 | 60, 9 | 59,7 | 66, 3 | 51,5 | 65, 9 |
| T1600 (%) | 65,4 | 64, 9 | 64, 9 | 62,7 | 66,3 | 70,1 |
| | | | | | | |
| L* | 1,7 | 22,6 | 23,2 | 20,9 | 38,4 | 25,3 |
| a* | 0,1 | -0,5 | -0,5 | 7,7 | 1,8 | 0,8 |
| b* | -0,6 | -2,5 | -2,6 | -19,4 | -7,8 | -6,8 |
| | | | | | | |
| Cristaux | Q | S | S | S | S | S |

**Tableau 4**

| | **G** | **H** | **I** | **J** | **K** |
|---|---|---|---|---|---|
| Verre | 4 | 5 | 6 | 7 | 8 |
| T (°C) | 1020 | 1020 | 1020 | 1020 | 1020 |
| t (min) | 10 | 10 | 10 | 10 | 10 |
| | | | | | |
| e (mm) | 4, 14 | 3,89 | 3, 82 | 4,00 | 4,00 |
| | | | | | |
| TL (%) | 1,12 | 0, 67 | 1,04 | 0,45 | 1,04 |
| T625 (%) | 29, 6 | 2,4 | 3,7 | 2,1 | 3, 95 |
| T950 (%) | 59,7 | 60,1 | 64,3 | 52,0 | 61,0 |
| T1600 (%) | 67,3 | 65, 9 | 68, 6 | 50, 9 | 65,0 |
| | | | | | |
| L* | 29,9 | 17,0 | 20,1 | 16,5 | 21, 6 |
| a* | -1,5 | 1,4 | 1,0 | 0,5 | -0,4 |
| b* | -2,6 | -6,6 | -7,9 | -4,3 | -1,3 |
| | | | | | |
| Cristaux | S | S | S | S | S |

L'exemple comparatif A, s'il possède des caractéristiques en transmission intéressantes et conformes aux exigences, présente un aspect en réflexion qui n'est pas celui recherché car il apparaît noir. Il est cristallisé essentiellement sous la forme β-quartz, du fait d'une température de céramisation trop faible pour permettre la croissance de cristaux de β-spodumène.

Lorsque le même verre est céramisé à plus haute température de manière à faire croître des cristaux de type β-spodumène, cas des exemples selon l'invention B et C, les propriétés en transmission sont sensiblement conservées, mais l'aspect en réflexion diffuse est totalement modifié, comme en témoigne la valeur de L* plus élevée. Les échantillons présentent la teinte grise recherchée.

Dans le cas de l'exemple comparatif D, la vitrocéramique ayant la composition comparative C1, même céramisée de manière à faire croître des cristaux de type β-spodumène, présente en revanche une teinte bleue en réflexion, caractérisée en particulier par une valeur de b* très négative et une valeur de a* trop élevée.

Par rapport aux exemples B et C, l'exemple E possède à la fois un facteur de transmission lumineuse plus faible et une teinte grise en réflexion plus claire. Les exemples F à K sont d'autres exemples selon l'invention.

## Revendications

1. Vitrocéramique du type aluminosilicate de lithium contenant une solution solide de β-spodumène représentant au moins 20% en poids de la fraction cristallisée totale, et présentant, pour une épaisseur de 4 mm :
- un facteur de transmission lumineuse compris dans un domaine allant de 0,3 à 2%, notamment de 0,6 à 1,7%,
- une transmission optique pour une longueur d'onde de 625 nm supérieure à 2,0%, notamment supérieure à 3,0%,
- une transmission optique pour une longueur d'onde de 950 nm comprise dans un domaine allant de 50 à 75 %,
- une transmission optique pour une longueur d'onde de 1600 nm d'au moins 50%, et
- des coordonnées colorimétriques L*, a*, b* en réflexion diffuse pour un illuminant D65 et un observateur de référence à 2° telles que 15,0 ≤ L* ≤ 40,0, -3,0 ≤ a* 3,0 et -10,0 ≤ b* ≤ 3,0,
ladite vitrocéramique étant telle que sa composition chimique comprend les constituants suivants, variant dans les limites pondérales ci-après définies :
| | |
|---|---|
| SnO₂ | 0,2-0,6%, notamment 0,25-0,5% |
| V₂O₅ | 0,015-0,070%, notamment 0,015-0,050% |
| Cr₂O₃ | 0,01-0,04% ou Bi₂O₃ 0,05-3,0% |
| Fe₂O₃ | 0,05- <0,15% |
| As₂O₃+Sb₂O₃ | < 0,1%, notamment < 0,05%. |

2. Vitrocéramique selon la revendication 1, telle que la teneur en V₂O₅ est d'au plus 0,060%.

3. Vitrocéramique selon l'une des revendications précédentes, comprenant une solution solide de β-spodumène comme phase cristalline principale.

4. Vitrocéramique selon l'une des revendications précédentes, telle que la teneur pondérale en SnO₂ est d'au plus 0,4%.

5. Vitrocéramique selon l'une des revendications précédentes, telle que la teneur pondérale en Fe₂O₃ est d'au moins 0,07% et d'au plus 0,12%.

6. Vitrocéramique selon l'une des revendications précédentes, telle que la teneur pondérale en Bi₂O₃ est d'au moins 0,1% et d'au plus 1,5%.

7. Vitrocéramique selon l'une des revendications précédentes, telle que la teneur pondérale en Cr₂O₃ est d'au moins 0,02% et d'au plus 0,035%.

8. Vitrocéramique selon l'une des revendications précédentes, dont la composition chimique comprend moins de 200 ppm, notamment moins de 100 ppm d'oxyde de cobalt.

9. Vitrocéramique selon l'une des revendications précédentes, dont la composition chimique comprend les constituants suivants, variant dans les limites pondérales ci-après définies :
| | |
|---|---|
| SiO₂ | 60-72% |
| Al₂O₃ | 18-23% |
| Li₂O | 2,5-4,5% |
| MgO | 0-3% |
| ZnO | 1-3% |
| TiO₂ | 1,5-4% |
| ZrO₂ | 0-2,5% |
| BaO | 0-5% |
| SrO | 0-5% |
| avec BaO + SrO | 0-5% |
| CaO | 0-2% |
| Na₂O | 0-1,5% |
| K₂O | 0-1,5% |
| P₂O₅ | 0-5% |
| B₂O₃ | 0-2%. |

10. Vitrocéramique selon la revendication précédente, telle que la somme des teneurs en SiO₂, Al₂O₃, Li₂O, MgO, ZnO, TiO₂, ZrO₂, BaO, SrO, CaO, Na₂O, Li₂O, K₂O, P₂O₅, B₂O₃, SnO₂, V₂O₅, Fe₂O₃, Cr₂O₃, Bi₂O₃ est d'au moins 98%, notamment 99%.

11. Article, notamment plaque de cuisson, comprenant une vitrocéramique selon l'une des revendications précédentes.

12. Procédé d'élaboration d'une vitrocéramique selon l'une quelconque des revendications 1 à 10, comprenant le traitement thermique d'une charge de matières premières vitrifiable, dans des conditions qui assurent successivement fusion, affinage puis céramisation, **caractérisé en ce que** ladite charge présente une composition qui permet d'obtenir une vitrocéramique selon l'une quelconque des revendications 1 à 10.

## Patentansprüche

1. Glaskeramik des Typs Lithiumaluminosilicat, enthaltend eine feste Lösung von β-Spodumen, die mindestens 20 Gew.-% der kristallisierten Fraktion insgesamt darstellt, und für eine Stärke von 4 mm aufweist:
- einen Lichtdurchlässigkeitsfaktor inklusive in einem Bereich von 0,3 bis 2 %, insbesondere von 0,6 bis 1,7 %,
- eine optische Durchlässigkeit für eine Wellenlänge von 625 nm über 2,0 %, insbesondere über 3,0 %,
- eine optische Durchlässigkeit für eine Wellenlänge von 950 nm inklusive in einem Bereich von 50 bis 75 %,
- eine optische Durchlässigkeit für eine Wellenlänge von 1600 nm von mindestens 50 %, und
- kolorimetrische Koordinaten L*, a*, b* bei Diffusreflexion für ein Normlicht D65 und einen Referenzbeobachter bei 2° derart, dass 15,0 ≤ L* ≤ 40,0, -3,0 ≤ a* ≤ 3,0 und -10,0 ≤ b* ≤ 3,0,
wobei die Glaskeramik derart ist, dass ihre chemische Zusammensetzung die folgenden Bestandteile umfasst, die innerhalb der nachfolgend festgelegten Gewichtsgrenzen schwanken:
| | |
|---|---|
| SnO₂ | 0,2-0,6 %, insbesondere 0,25-0,5 % |
| V₂O₅ | 0,015-0,070 %, insbesondere 0,015-0,050 % |
| Cr₂O₃ | 0,01-0,04 % oder Bi₂O₃ 0,05-3,0 % |
| Fe₂O₃ | 0,05- <0,15 % |
| As₂O₃ + Sb₂O₃ | <0,1 %, insbesondere <0,05 %. |

2. Glaskeramik nach Anspruch 1, derart, dass der Anteil an V₂O₅ höchstens 0,060 % beträgt.

3. Glaskeramik nach einem der vorangehenden Ansprüche, umfassend eine feste Lösung von β-Spodumen als kristalline Hauptphase.

4. Glaskeramik nach einem der vorangehenden Ansprüche, derart, dass der Gewichtsanteil an SnO₂ höchstens 0,4 % beträgt.

5. Glaskeramik nach einem der vorangehenden Ansprüche, derart, dass der Gewichtsanteil an Fe₂O₃ mindestens 0,07 % und höchstens 0,12 % beträgt.

6. Glaskeramik nach einem der vorangehenden Ansprüche, derart, dass der Gewichtsanteil an Bi₂O₃ mindestens 0,1 % und höchstens 1,5 % beträgt.

7. Glaskeramik nach einem der vorangehenden Ansprüche, derart, dass der Gewichtsanteil an Cr₂O₃ mindestens 0,02 % und höchstens 0,035 % beträgt.

8. Glaskeramik nach einem der vorangehenden Ansprüche, deren chemische Zusammensetzung unter 200 ppm, insbesondere unter 100 ppm, Kobaltoxid umfasst.

9. Glaskeramik nach einem der vorangehenden Ansprüche, deren chemische Zusammensetzung die folgenden Bestandteile umfasst, die innerhalb der nachfolgend festgelegten Gewichtsgrenzen schwanken:
| | |
|---|---|
| SiO₂ | 60-72 % |
| Al₂O₃ | 18-23 % |
| Li₂O | 2,5-4,5 % |
| MgO | 0-3 % |
| ZnO | 1-3 % |
| TiO₂ | 1,5-4 % |
| ZrO₂ | 0-2,5 % |
| BaO | 0-5 % |
| SrO | 0-5 % |
| mit BaO + SrO | 0-5 % |
| CaO | 0-2 % |
| Na₂O | 0-1,5 % |
| K₂O | 0-1,5 % |
| P₂O₅ | 0-5 % |
| B₂O₃ | 0-2 % |

10. Glaskeramik nach vorangehendem Anspruch, derart, dass die Summe der Anteile an SiO₂, Al₂O₃, Li₂O, MgO, ZnO, TiO₂, ZrO₂, BaO, SrO, CaO, Na₂O, Li₂O, K₂O, P₂O₅, B₂O₃, SnO₂, V₂O₅, Fe₂O₃, Cr₂O₃, Bi₂O₃ mindestens 98 %, insbesondere 99 %, beträgt.

11. Artikel, insbesondere Kochplatte, umfassend eine Glaskeramik nach einem der vorangehenden Ansprüche.

12. Verfahren zur Herstellung einer Glaskeramik nach einem der Ansprüche 1 bis 10, umfassend die thermische Behandlung einer glasbildenden Rohstoffcharge unter Bedingungen, die aufeinanderfolgend das Schmelzen, das Läutern, danach die Keramisierung sichern, **dadurch gekennzeichnet, dass** die Charge eine Zusammensetzung aufweist, die erlaubt, eine Glaskeramik nach einem der Ansprüche 1 bis 10 zu erhalten.

## Claims

1. A glass-ceramic of the lithium aluminosilicate type comprising a solid solution of β-spodumene representing at least 20% by weight of the total crystalline fraction, and exhibiting, for a thickness of 4 mm;
- a light transmittance within a range extending from 0.3 to 2%, in particular from 0.6 to 1.7%,
- an optical transmittance for a wavelength of 625 nm of greater than 2.0%, in particular of greater than 3.0%,
- an optical transmittance for a wavelength of 950 nm within a range extending from 50 to 75%,
- an optical transmittance for a wavelength of 1600 nm of at least 50%, and
- L*, a*, b* colorimetric coordinates in diffuse reflection for an illuminant D65 and a reference observer at 2° such that 15.0 ≤ L* ≤ 40.0, -3.0 ≤ a* ≤ 3.0 and -10.0 ≤ b* ≤ 3.0,
said glass-ceramic being such that its chemical composition comprises the following constituents, varying within the limits by weight defined below:
| | |
|---|---|
| SnO₂ | 0.2-0.6%, in particular 0.25-0.5% |
| V₂O₅ | 0.015-0.070%, in particular 0.015-0.050% |
| Cr₂O₃ | 0.01-0.04% or Bi₂O₃ 0.05-3.0% |
| Fe₂O₃ | 0.05- <0.15% |
| As₂O₃+Sb₂O₃ | <0.1%, in particular <0.05%. |

2. The glass-ceramic according to claim 1, wherein the content of V₂O₅ is at most 0.060%.

3. The glass-ceramic according to any one of the preceding claims, comprising a solid solution of β-spodumene as main crystal phase.

4. The glass-ceramic according to any one of the preceding claims, wherein the content by weight of SnO₂ is at most 0.4%.

5. The glass-ceramic according to any one of the preceding claims, wherein the content by weight of Fe₂O₃ is at least 0.07% and at most 0.12%.

6. The glass-ceramic according to any one of the preceding claims, wherein the content by weight of Bi₂O₃ is at least 0.1% and at most 1.5%.

7. The glass-ceramic according to any one of the preceding claims, wherein content by weight of Cr₂O₃ is at least 0.02% and at most 0.035%.

8. The glass-ceramic according to any one of the preceding claims, the chemical composition of which comprises less than 200 ppm, in particular less than 100 ppm, of cobalt oxide.

9. The glass-ceramic according to any one of the preceding claims, the chemical composition of which comprises the following constituents, varying within the limits by weight defined below:
| | |
|---|---|
| SiO₂ | 60-72% |
| Al₂O₃ | 18-23% |
| Li₂O | 2.5-4.5% |
| MgO | 0-3% |
| ZnO | 1-3% |
| TiO₂ | 1.5-4% |
| ZrO₂ | 0-2.5% |
| BaO | 0-5% |
| SrO | 0-5% |
| With BaO + SrO | 0-5% |
| CaO | 0-2% |
| Na₂O | 0-1.5% |
| K₂O | 0-1.5% |
| P₂O₅ | 0-5% |
| B₂O₃ | 0-2% |

10. The glass-ceramic according to in the preceding claim, wherein the sum of the contents of SiO₂, Al₂O₃, Li₂O, MgO, ZnO, TiO₂, ZrO₂, BaO, SrO, CaO, Na₂O, Li₂O, K₂O, P₂O₅, B₂O₃, SnO₂, V₂O₅, Fe₂O₃, Cr₂O₃ and Bi₂O₃ is at least 98%, in particular 99%.

11. An article, in particular a cooktop, comprising a glass-ceramic as claimed in any one of the preceding claims.

12. A process for the preparation of a glass-ceramic as claimed in any one of claims 1 to 10, comprising the heat treatment of a charge of vitrifiable starting materials under conditions which successively provide for the melting, refining and then ceramization, wherein said charge exhibits a composition which makes it possible to obtain a glass-ceramic as claimed in any one of claims 1 to 10.
